# EUROPEAN PATENT SPECIFICATION

(11) **EP 3 338 123 B1**
(45) Date of publication and mention of the grant of the patent: **02.08.2023**
(21) Application number: 16763578.8
(22) Date of filing: 17.08.2016
(51) Int. Cl.: G02B 6/38

(54) **AUTOMATIC INJECTION SYSTEM AND METHOD OF MANUFACTURING FERRULE**
AUTOMATISCHES INJEKTIONSSYSTEM UND VERFAHREN ZUR HERSTELLUNG EINER PRESSHÜLSE
SYSTÈME D'INJECTION AUTOMATIQUE ET PROCÉDÉ DE FABRICATION DE FERRULE

(30) Priority: 17.08.2015 CN 201510504067
(43) Date of publication of application: 27.06.2018
(73) Proprietor: Tyco Electronics (Shanghai) Co. Ltd., Shanghai 200131 (CN); TE Connectivity Corporation, Berwyn, PA 19312 (US); Shenzhen AMI Technology Co. Ltd, Shenzhen Guangdong 518108 (CN)
(72) Inventor: XIE, Fengchu, Shanghai (CN); ZENG, Qinglong, Shenzhen Guangdong 518108 (CN); ZHANG, Yu, Shanghai (CN); ZHANG, Dandan, Shanghai (CN); HU, Lvhai, Shanghai (CN); LU, Roberto Francisco-Yi, Berwyn, Pennsylvania 19312 (US)
(74) Representative: Grünecker Patent- und Rechtsanwälte PartG mbB
(86) International application number: PCT/IB2016/054924
(87) International publication number: WO 2017/029618

(56) References cited:
- WO-A1-2015/044807
- JP-A- 2002 040 294
- JP-A- 2003 255 182
- JP-B2- 3 038 570

## Description

### BACKGROUND OF THE INVENTION

### Field of the Invention

The invention relates to an automatic injection system for injecting an adhesive into bores of a multi-bore ferrule and a method of manufacturing a ferrule assembly.

### Description of the Related Art

A fiber optic connector generally comprises a housing and a multi-bore ferrule assembly assembled in the housing. The ferrule assembly comprises a multi-bore ferrule and optical fibers inserted into bores of the multi-bore ferrule. An existing method of manufacturing the ferrule assembly typically comprises: firstly, injecting an adhesive (also referred as glue) into the multi-bore ferrule until the bores are fully filled with the adhesive; secondly, inserting the optical fibers into the bores which are fully filled with the adhesive; finally, heating and curing the adhesive so as to secure the optical fibers in the multi-bore ferrule. As a result, the ferrule assembly is completely manufactured.

In the prior art, the adhesive is generally injected into the ferrule manually. The manual injection has a low efficiency and is hard to control an amount of the injected adhesive accurately, thereby affecting a quality of the manufactured ferrule assembly and reducing an optical performance of the ferrule assembly.

In JP 2002 040294 A a method and device for injecting a fixed quantity of adhesive into an optical fiber insertion hole of an optical connector part such as a ferrule. The device comprises a slidable holding tool, wherein a ferrule can be held at each end of the holding tool. The ends can alternatingly be brought into an adhesive injection station, wherein the other end is arranged at a ferrule positioning station to replace the ferrule held in said end of the holding tool.

JP 2003 255182 A discloses a manufacturing method for mass-producing ferrules, which are mainly incorporated into receptacle-type semiconductor laser modules. The turntable comprises a total of three loading holes arranged at a pre-determined angle form one another. In a first station the ferrule is mounted into a loading hole. By a rotation of a predetermined angle, the ferrule is moved to a second station, where the optical fiber insertion hole of the ferrule engages an injector and adhesive is injected into the ferrule. Thereafter the turntable is rotated by a predetermined angle, so that the ferrule is moved to a third station for inserting an optical fiber into the optical fiber insertion hole.

JP 3 038570 B2 relates to a device for assembling an optical cord and a ferrule. The device comprises transferring means for holding and moving a ferrule to predetermined positions. At a first position, an injector for injecting adhesive into the hole at the rear end of the ferrule is provided. After the adhesive is injected into said hole, the ferrule is moved to a second position, where a filling device injects high-pressure air into the rear end hole in order to push the injected adhesive into the central hole of the ferrule. When an optical sensor detects that the hole has been completely filled with adhesive, the ferrule is transferred by the ferrule gripping means for insertion of the optical fiber.

### SUMMARY OF THE INVENTION

The present invention aims to solve at least one aspect of the above issues and disadvantages in the prior art.

The invention provides an automatic injection system for injecting an adhesive into bores of a multi-bore ferrule according to independent claim 1. The invention further provides a method of manufacturing a ferrule assembly comprising a multi-bore ferrule and optical fibers inserted into the bores according to independent claim 7. Further embodiments are provided by the dependent claims.

In the embodiments of the claimed invention, the adhesive is allowed to be automatically injected into the bores of the multi-bore ferrule by using the automatic injection system, thereby increasing the efficiency of injecting the adhesive.

Moreover, the automatic injection system has two adhesive injection stations. At the first adhesive injection station, the adhesive is injected into the multi-bore ferrule, into which the optical fibers are not inserted, so as to fill the bores of the multi-bore ferrule fully with the adhesive. At the second adhesive injection station, the adhesive is injected again into the multi-bore ferrule, into which the optical fibers are inserted, so as to compensate the loss of adhesive during inserting the optical fibers. Such an injection process improves the quality of the manufactured ferrule assembly.

Further, in some embodiments, the amount of the adhesive injected into the bores of the multi-bore ferrule is accurately controller through a visual feedback, so that the amount of the injected adhesive is accurately controllable, thereby improving the quality of the manufactured ferrule assembly.

Other objectives and advantages of the present invention will become more apparent by describing the present disclosure with reference to the following accompanying drawings, and this description may also aid to give a complete comprehension of the present disclosure.

### BRIEF DESCRIPTION OF THE DRAWINGS

Fig.1 is a schematic perspective view of a multi-bore ferrule according to an embodiment, not forming part of the claimed invention;
Fig.2 is a schematic perspective view of a ribbon cable according to an embodiment, not forming part of the claimed invention;
Fig.3 is a schematic perspective view of an automatic injection system according to an embodiment of the claimed invention;
Fig.4 is a partially enlarged view of the automatic injection system in Fig.3; and
Fig.5 is another partially enlarged view of the automatic injection system in Fig.3.

### DETAILED DESCRIPTION OF PREFERRED EMBODIMENTS OF THE IVENTION

The technical solutions of the present invention will be further explained specifically in the following embodiments in combination with accompanying drawings. The same or similar reference numbers indicate the same or similar parts in the specification. The explanation of the following embodiments with reference to the drawings intends to explain the general inventive concept of the present invention, but cannot be interpreted as a limitation to the present invention.

Moreover, in the following detailed description, for the purpose of explanation, a number of specific details are explained in order to provide a complete comprehension to the disclosed embodiments. However, it is obvious that one or more embodiments may be implemented without these specific details. In other cases, well known structures and devices are embodied in a form of illustration to simplify the drawings.

According to a general technical concept of the present invention, it is provided an automatic injection system for injecting an adhesive into bores of a multi-bore ferrule, comprising: an injector adapted to inject the adhesive into an injection opening formed in the multi-bore ferrule; a first clamp configured to clamp the multi-bore ferrule so as to hold the multi-bore ferrule at a first adhesive injection station; and a second clamp configured to clamp the multi-bore ferrule so as to hold the multi-bore ferrule at a second adhesive injection station, wherein, at the first adhesive injection station, optical fibers are not inserted into the bores of the multi-bore ferrule, and the injector injects the adhesive into the multi-bore ferrule, into which the optical fibers are not inserted, until the bores are fully filled with the adhesive, and at the second adhesive injection station, the optical fibers are inserted into the bores, which are fully filled with the adhesive, of the ferule, and the injector injects the adhesive into the multi-bore ferrule again so as to compensate the loss of adhesive during inserting the optical fibers.

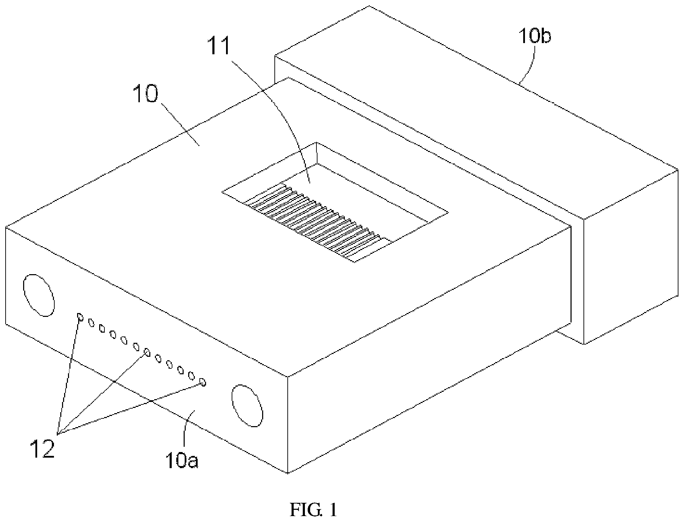

Fig.1 is a schematic perspective view of a multi-bore ferrule 10 according to an embodiment, not forming part of the claimed invention.

As shown in Fig.1, the multi-bore ferrule 10 has a plurality of bores 12 extending longitudinally along the ferrule 10 and an injection opening 11 formed on a top of the ferrule 10.

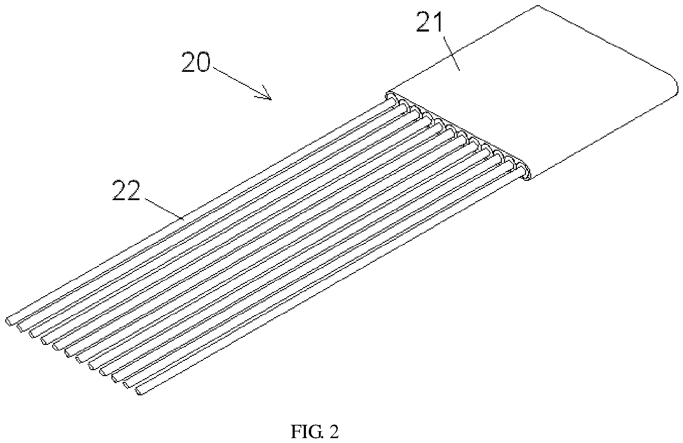

Fig.2 is a schematic perspective view of a ribbon cable 20 according to an embodiment, not forming part of the claimed invention.

As shown in Fig.2, the ribbon cable 20 has a plurality of optical fibers 22 and a cladding layer 21 covering the optical fibers 22. A length of the cladding layer 21 is stripped off so as to expose a part of the optical fibers 22.

As shown in Figs. 1 and 2, the ferrule assembly to be manufactured comprises the multi-bore ferrule 10 as shown in Fig.1 and the optical fibers 22 inserted and secured into the bores 12 of the multi-bore ferrule 10.

In the embodiment, the optical fibers 22 are inserted from an insertion port (not shown) at a rear end 10b of the multi-bore ferrule and protrude by a predefined distance from a front end 10a of the multi-bore ferrule 10.

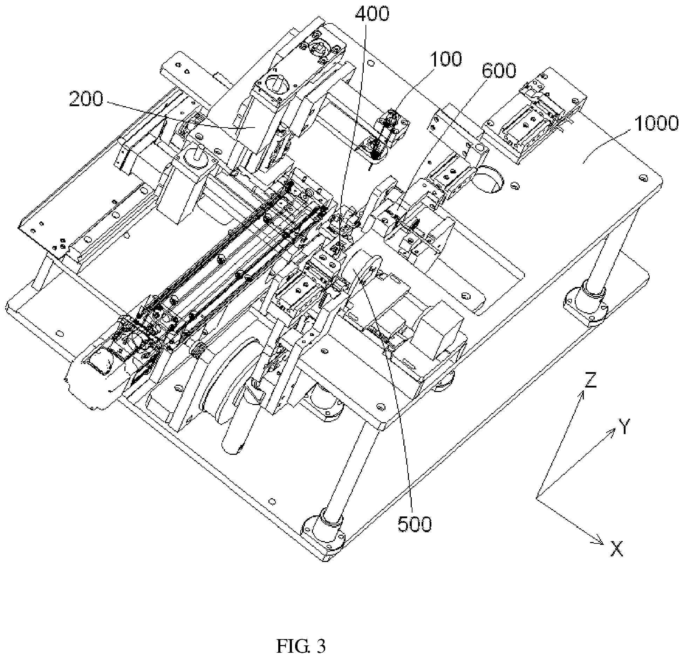

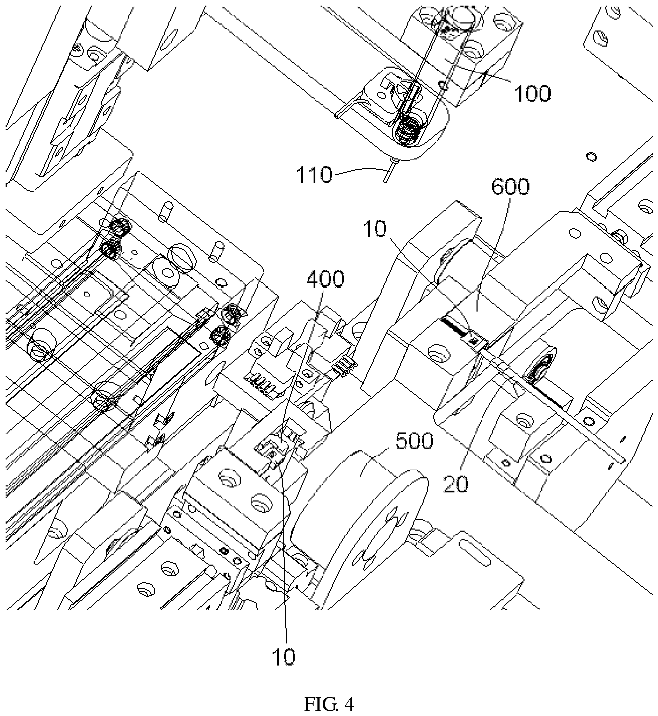

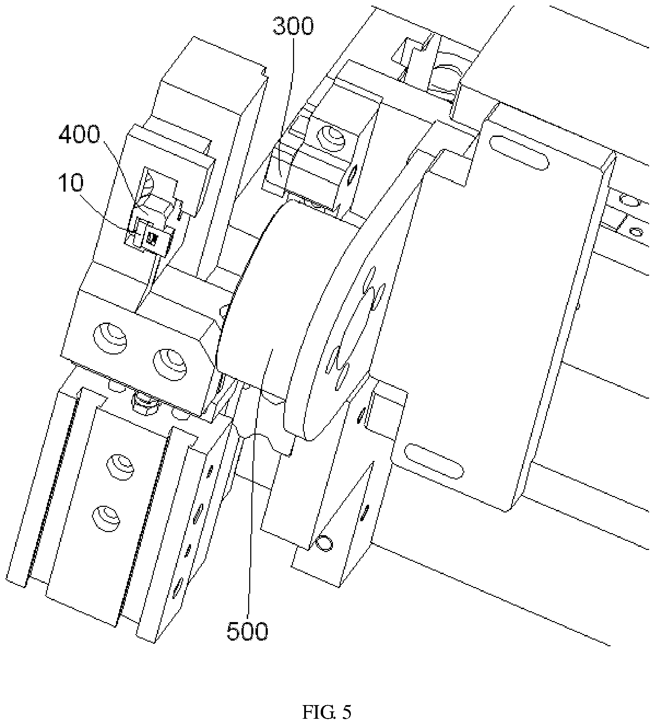

Fig.3 is a schematic perspective view of an automatic injection system according to the claimed invention, Fig.4 is a partially enlarged view of the automatic injection system in Fig.3, and Fig.5 is another partially enlarged view of the automatic injection system in Fig.3.

According to an embodiment of the claimed invention, an automatic injection system for injecting an adhesive into the bores 12 of the multi-bore ferrule 10 is disclosed. As shown in Figs. 3 to 5, the automatic injection system mainly comprises an injector 100, a first clamp 400 and a second clamp 600.

As shown in Figs. 3 to 5, the injector 100 is adapted to inject the adhesive into the injection opening 11 of the multi-bore ferrule 10. The first clamp 400 is configured to hold the multi-bore ferrule 10 so as to hold the multi-bore ferrule 10 at a first adhesive injection station. The second clamp 600 is configured to clamp the multi-bore ferrule 10 so as to hold the multi-bore ferrule 10 at a second adhesive injection station.

As shown in Figs. 3 to 5, at the first adhesive injection station, the optical fibers 22 are not inserted into the bores 12 of the multi-bore ferrule 10, and the injector 100 injects the adhesive into the multi-bore ferrule 10, into which the optical fibers 22 are not inserted, until the bores 12 are fully filled with the adhesive.

As shown in Figs. 3 to 5, at the second adhesive injection station, the optical fibers 22 are inserted into the bores 12, which have been fully filled with the adhesive, of the ferule 10, and the injector 100 injects again the adhesive into the multi-bore ferrule 10, into which the optical fibers 22 are inserted, so as to compensate the loss of adhesive during inserting the optical fibers 22.

In the embodiment illustrated in Figs. 3 to 5, the automatic injection system further comprises a movable mechanism configured to drive the injector 100 to move to the first and second adhesive injection stations. When the movable mechanism moves the injector 100 to the first or second adhesive injection station, a needle 110 of the injector 100 is aligned with the injection opening 11 of the multi-bore ferrule 10 held by the first or second clamp 400, 600.

In the embodiment illustrated in Figs. 3 to 5, the movable mechanism comprises a movable carrier 200 which is movable in a first direction, a second direction and a third direction, which are perpendicular to each other. The injector 100 is mounted on the movable carrier 200 so as to move with the movable carrier 200. However, the present disclosure is not limited thereto, the movable mechanism may also be a manipulator or a robot which is adapted to hold and move the injector 100.

In the embodiment illustrated in Figs. 3 to 5, the automatic injection system further comprises a vacuum suction device provided at the first adhesive injection station. The vacuum suction device 300 is adapted to be attached to a front end 10a of the multi-bore ferrule 10 by sucking force so that the adhesive injected into the injection opening 11 is drawn into the bores 12.

In the embodiment illustrated in Figs. 3 to 5, the automatic injection system further comprises a visual detector 500 and a controller (not shown). The visual detector is provided at the first adhesive injection station and configured to detect an amount of the adhesive injected into the multi-bore ferrule 10. The controller is configured to control the injector 100 to inject the adhesive into the multi-bore ferrule 10 based on the amount of the injected adhesive detected by the visual detector 500 until all the bores 12 of the multi-bore ferrule 10 are fully filled with the adhesive. In this way, the amount of the adhesive injected into the bores of the multi-bore ferrule is accurately controller through a visual feedback, so that the amount of the injected adhesive is accurately controllable, thereby improving a quality of manufactured ferrule assembly.

In the illustrated embodiment in Fig.3, the automatic injection system further comprises a stationary base plate 1000 for mounting at least one of the injector 100, the first clamp 400, the second clamp 600, the movable carrier 200, the visual detector 500, and the vacuum suction device 300, and other necessary components of the automatic injection system thereon.

In an exemplary embodiment, the visual detector 500 may comprise a camera.

A method of manufacturing a ferrule assembly according to an embodiment of the claimed invention will be explained in detail with reference to Figs. 1 to 5. The method comprises the steps of
S110. holding a multi-bore ferrule 10, into which optical fibers 22 are not inserted, on a first clamp 400 provided at a first adhesive injection station;
S120. injecting an adhesive into the multi-bore ferrule 10, into which the optical fibers 22 are not inserted, with an injector 100, until bores 12 of the multi-bore ferrule 10 are fully filled with the adhesive;
S130. removing the multi-bore ferrule 10 from the first clamp 400 and holding the multi-bore ferrule 10 on a second clamp 600 provided at a second adhesive injection station;
S140. inserting the optical fibers 22 into the bores 12 of the multi-bore ferrule 10 held by the second clamp 600; and
S150. injecting again the adhesive into the multi-bore ferrule 10, into which the optical fibers 22 are inserted, with the injector 100, so as to compensate the loss of adhesive during inserting the optical fibers 22.

In an exemplary embodiment, the step S120 comprises steps of:
S121. injecting the adhesive into an injection opening 11 of the multi-bore ferrule 10, into which the optical fibers 22 are not inserted, with the injector 100; and
S122. drawing the adhesive at a front end 10a of the multi-bore ferrule 10 by a vacuum suction device 300 so as to draw the adhesive injected into the injection opening 11 into the bores 12.

In another embodiment, the step S120 may further comprise steps of
S123. detecting an amount of the adhesive injected into the multi-bore ferrule 10 with a visual detector 500; and
S124. controlling the injector 100 to inject the adhesive into the multi-bore ferrule 10 based on the amount of the injected adhesive detected by the visual detector 500 until all the bores 12 of the multi-bore ferrule 10 are fully filled with the adhesive.

In another embodiment, the method may further comprise a step of
S160. heating and curing the adhesive in the multi-bore ferrule 10, so as to secure the optical fibers 22 in the bores 12 of the multi-bore ferrule 10.

Though the present invention is described with reference to the accompanying drawings, the disclosed embodiments with reference to the drawings intend to make an exemplary illustration to the implementations of the present invention, but cannot be interpreted as a limitation to the present invention.

It should be noted that, the term "comprising", "comprise", "including" and "include" should be understood as not excluding other elements or steps, the word "a" or "an" should be understood as not excluding plural of said elements or steps. In addition, any reference number in the claims should not be understood as limiting the scope of the present invention.

## Claims

1. An automatic injection system for injecting an adhesive into bores (12) of a multi-bore ferrule (10), comprising:
an injector (100) adapted to inject the adhesive into an injection opening (11) formed in the multi-bore ferrule (10);
a first adhesive injection station;
a first clamp (400) configured to clamp the multi-bore ferrule (10) so as to hold the multi-bore ferrule (10) at the first adhesive injection station; wherein at the first adhesive injection station, optical fibers (22) are not inserted into the bores (12) of the multi-bore ferrule (10) and the injector (100) is adapted to inject the adhesive into the multi-bore ferrule (10) into which the optical fibers (22) are not inserted, until the bores (12) are fully filled with the adhesive, wherein the automatic injection system further comprises a second adhesive injection station;
a second clamp (600) configured to clamp the multi-bore ferrule (10) so as to hold the multi-bore ferrule (10) at the second adhesive injection station,
wherein at the second adhesive injection station, the optical fibers (22) are inserted into the bores (12) which are fully filled with the adhesive, of the multi-bore ferrule (10), and the injector (100) is adapted to inject the adhesive into the multi-bore ferrule (10) again so as to compensate the loss of adhesive during inserting the optical fibers (22),
wherein the automatic injection system further comprises a movable mechanism configured to move the injector (100) to the first and second adhesive injection stations.

2. The automatic injection system according to claim 1, wherein, at the first or second adhesive injection station, a needle (110) of the injector (100) is aligned with the injection opening (11) of the multi-bore ferrule (10) held by the first or second clamp (400, 600).

3. The automatic injection system according to claim 1, wherein,
the movable mechanism comprises a movable carrier (200) which is movable in a first direction, a second direction and a third direction, which are perpendicular to each other, and
the injector (100) is mounted on the movable carrier (200) so as to move with the movable carrier (200).

4. The automatic injection system according to claim 1, wherein,
the movable mechanism comprises a manipulator or a robot which is adapted to hold and move the injector (100).

5. The automatic injection system according to claim 1, further comprising:
a vacuum suction device (300) provided at the first adhesive injection station, which is adapted to be attached to a front end (10a) of the multi-bore ferrule (10) by sucking force so that the adhesive injected into the injection opening (11) is drawn into the bores (12).

6. The automatic injection system according to claim 5, further comprising:
a visual detector (500) provided at the first adhesive injection station, configured to detect an amount of the adhesive injected into the multi-bore ferrule (10); and
a controller configured to control the injector (100) to inject the adhesive into the multi-bore ferrule (10) based on the amount of the injected adhesive detected by the visual detector (500) until all the bores (12) of the multi-bore ferrule (10) are fully filled with the adhesive.

7. A method of manufacturing a ferrule assembly comprising a multi-bore ferrule (10) having a plurality of bores (12) and optical fibers (22) inserted into the bores (12), comprising the steps of:
S110. holding the multi-bore ferrule (10), into which the optical fibers (22) are not inserted, on a first clamp (400) provided at a first adhesive injection station;
S120. injecting an adhesive into the multi-bore ferrule (10), into which the optical fibers (22) are not inserted, with an injector (100), until the bores (12) are fully filled with the adhesive;
S130. removing the multi-bore ferrule (10) from the first clamp (400) and holding the multi-bore ferrule (10) on a second clamp (600) provided at a second adhesive injection station;
S140. inserting the optical fibers (22) into the bores (12) of the multi-bore ferrule (10) held by the second clamp (600); and
S150. injecting again the adhesive into the multi-bore ferrule (10), into which the optical fibers (22) are inserted, with the injector (100), so as to compensate the loss of adhesive during inserting the optical fibers (22), wherein
the method further comprises a step of: moving the injector (100) by a movable mechanism so as to move the injector (100) to the first and second adhesive injection stations.

8. The method according to claim 7, wherein, at the first or second adhesive injection station, a needle (110) of the injector (100) is aligned with an injection opening (11) of the multi-bore ferrule (10) held by the first or second clamp (600).

9. The method according to claim 8, wherein,
the movable mechanism comprises a movable carrier (200) which is movable in a first direction, a second direction and a third direction, which are perpendicular to each other, and
the injector (100) is mounted on the movable carrier (200) so as to move with the movable carrier (200).

10. The method according to claim 7, wherein, the movable mechanism comprises a manipulator or a robot which is adapted to hold and move the injector (100).

11. The method according to claim 7, wherein, the step S120 comprises steps of:
S121. injecting the adhesive into an injection opening (11) of the multi-bore ferrule (10), into which the optical fibers (22) are not inserted, with the injector (100); and
S122. drawing the adhesive at a front end (10a) of the multi-bore ferrule (10) by a vacuum suction device (300) so as to draw the adhesive injected into the injection opening (11) into the bores (12).

12. The method according to claim 11, wherein, the step S120 further comprises steps of:
S123. detecting an amount of the adhesive injected into the multi-bore ferrule (10) with a visual detector (500); and
S124. controlling the injector (100) to inject the adhesive into the multi-bore ferrule (10) based on the amount of the injected adhesive detected by the visual detector (500) until all the bores (12) of the multi-bore ferrule (10) are fully filled with the adhesive.

## Patentansprüche

1. Automatisches Einspritzsystem zum Einspritzen eines Klebstoffs in Bohrungen (12) einer Ferrule (10) mit mehreren Bohrungen, umfassend:
eine Einspritzeinrichtung (100), die so eingerichtet ist, dass sie den Klebstoff in eine in der Ferrule (10) mit mehreren Bohrungen ausgebildete Einspritzöffnung (11) einspritzt;
eine erste Klebstoff-Einspritzstation;
eine erste Klemme (400), die so ausgeführt ist, dass sie die Ferrule (10) mit mehreren Bohrungen festklemmt, um die Ferrule (10) mit mehreren Bohrungen an der ersten Klebstoff-Einspritzstation zu halten; wobei an der ersten Klebstoff-Einspritzstation keine optischen Fasern (22) in die Bohrungen (12) der Ferrule (10) mit mehreren Bohrungen eingeführt sind und die Einspritzeinrichtung (100) so eingerichtet ist, dass sie den Klebstoff in die Ferrule (10) mit mehreren Bohrungen einspritzt, in die die optischen Fasern (22) nicht eingeführt sind, bis die Bohrungen (12) vollständig mit dem Klebstoff gefüllt sind, wobei das automatische Einspritzsystem des Weiteren eine zweite Klebstoff-Einspritzstation umfasst;
eine zweite Klemme (600), die so ausgeführt ist, dass sie die Ferrule (10) mit mehreren Bohrungen festklemmt, um die Ferrule (10) mit mehreren Bohrungen an der zweiten Klebstoff-Einspritzstation zu halten,
wobei an der zweiten Klebstoff-Einspritzstation die optischen Fasern (22) in die Bohrungen (12) der Ferrule (10) mit mehreren Bohrungen eingeführt werden, die vollständig mit dem Klebstoff gefüllt sind, und die Einspritzeinrichtung (100) so eingerichtet ist, dass sie den Klebstoff in die Ferrule (10) mit mehreren Bohrungen erneut einspritzt, um den Verlust an Klebstoff beim Einführen der optischen Fasern (22) auszugleichen,
und das automatische Einspritzsystem des Weiteren einen beweglichen Mechanismus umfasst, der so ausgeführt ist, dass er die Einspritzeinrichtung (100) zu der ersten und der zweiten Klebstoff-Einspritzstation bewegt.

2. Automatisches Einspritzsystem nach Anspruch 1, wobei in der ersten und der zweiten Klebstoff-Einspritzstation eine Nadel (110) der Einspritzeinrichtung (100) auf die Einspritzöffnung (11) der von der ersten oder zweiten Klemme (400, 600) gehaltenen Ferrule (10) mit mehreren Bohrungen ausgerichtet ist.

3. Automatisches Einspritzsystem nach Anspruch 1, wobei
der bewegliche Mechanismus einen beweglichen Träger (200) umfasst, der in einer ersten Richtung, einer zweiten Richtung sowie einer dritten Richtung bewegt werden kann, die senkrecht zueinander sind; und
die Einspritzeinrichtung (100) so an dem beweglichen Träger (200) angebracht ist, dass sie sich mit dem beweglichen Träger (200) bewegt.

4. Automatisches Einspritzsystem nach Anspruch 1, wobei
der bewegliche Mechanismus einen Manipulator oder einen Roboter umfasst, der so eingerichtet ist, dass er die Einspritzeinrichtung (100) hält und bewegt.

5. Automatisches Einspritzsystem nach Anspruch 1, das des Weiteren umfasst:
eine Vakuum-Ansaugeinrichtung (300), die an der ersten Klebstoff-Einspritzstation vorhanden und so eingerichtet ist, dass sie durch Saugkraft an einem vorderen Ende (10a) der Ferrule (10) mit mehreren Bohrungen festgehalten wird, so dass der in die Einspritzöffnung (11) eingespritzte Klebstoff in die Bohrungen (12) hinein gesaugt wird.

6. Automatisches Einspritzsystem nach Anspruch 5, das des Weiteren umfasst:
einen optischen Detektor (500), der an der ersten Klebstoff-Einspritzstation vorhanden und so ausgeführt ist, dass er eine Menge des in die Ferrule (10) mit mehreren Bohrungen eingespritzten Klebstoffs erfasst; sowie
eine Steuerungseinrichtung, die so ausgeführt ist, dass sie die Einspritzeinrichtung (100) so steuert, dass sie den Klebstoff auf Basis der von dem optischen Detektor (500) erfassten Menge des eingespritzten Klebstoffs in die Ferrule (10) mit mehreren Bohrungen einspritzt, bis alle Bohrungen (12) der Ferrule (10) mit mehreren Bohrungen vollständig mit dem Klebstoff gefüllt sind.

7. Verfahren zum Herstellen einer Ferrulen-Anordnung, die eine Ferrule (10) mit mehreren Bohrungen umfasst, die eine Vielzahl von Bohrungen (12) sowie in die Bohrungen (12) eingeführte optische Fasern (22) aufweist, umfassend die folgenden Schritte:
S110 - Halten der Ferrule (10) mit mehreren Bohrungen, in die die optischen Fasern (22) nicht eingeführt sind, an einer ersten Klemme (400), die an einer ersten Klebstoff-Einspritzstation vorhanden ist;
S120 - Einspritzen eines Klebstoffs in die Ferrule (10) mit mehreren Bohrungen, in die die optischen Fasern (22) nicht eingeführt sind, mit einer Einspritzeinrichtung (100), bis die Bohrungen (12) vollständig mit dem Klebstoff gefüllt sind;
S130 - Entfernen der Ferrule (10) mit mehreren Bohrungen von der ersten Klemme (400) und Halten der Ferrule (10) mit mehreren Bohrungen an einer zweiten Klemme (600), die an einer zweiten Klebstoff-Einspritzstation vorhanden ist;
S140 - Einführen der optischen Fasern (22) in die Bohrungen (12) der von der zweiten Klemme (600) gehaltenen Ferrule (10) mit mehreren Bohrungen; sowie
S150 - erneutes Einspritzen des Klebstoffs in die Ferrule (10) mit mehreren Bohrungen, in die die optischen Fasern (22) eingeführt sind, mit der Einspritzeinrichtung (100), um den Verlust an Klebstoff beim Einführen der optischen Fasern (22) auszugleichen, wobei
das Verfahren des Weiteren einen Schritt umfasst, in dem Bewegen der Einspritzeinrichtung (100) mit einem beweglichen Mechanismus durchgeführt wird, um die Einspritzeinrichtung (100) zu der ersten und der zweiten Klebstoff-Einspritzstation zu bewegen.

8. Verfahren nach Anspruch 7, wobei an der ersten oder der zweiten Klebstoff-Einspritzstation eine Nadel (110) der Einspritzeinrichtung (100) auf eine Einspritzöffnung (11) der von der ersten oder der zweiten Klemme (600) gehaltenen Ferrule (10) mit mehreren Bohrungen ausgerichtet wird.

9. Verfahren nach Anspruch 8, wobei,
der bewegliche Mechanismus einen beweglichen Träger (200) umfasst, der in einer ersten Richtung, einer zweiten Richtung sowie einer dritten Richtung bewegt werden kann, die senkrecht zueinander sind; und
die Einspritzeinrichtung (100) so an dem beweglichen Träger (200) angebracht ist, dass sie sich mit dem beweglichen Träger (200) bewegt.

10. Verfahren nach Anspruch 7, wobei der bewegliche Mechanismus einen Manipulator oder einen Roboter umfasst, der so eingerichtet ist, dass er die Einspritzeinrichtung (100) hält und bewegt.

11. Verfahren nach Anspruch 7, wobei der Schritt S120 die folgenden Schritte umfasst:
S121 - Einspritzen des Klebstoffs in eine Einspritzöffnung (11) der Ferrule (10) mit mehreren Bohrungen, in die die optischen Fasern (22) nicht eingeführt sind, mit der Einspritzeinrichtung (100); und
S122 - Ansaugen des Klebstoffs an einem vorderen Ende (10a) der Ferrule (10) mit mehreren Bohrungen mittels einer Vakuum-Ansaugeinrichtung (300), um den in die Einspritzöffnung (11) eingespritzten Klebstoff in die Bohrungen (12) hinein zu saugen.

12. Verfahren nach Anspruch 11, wobei der Schritt S120 des Weiteren folgende Schritte umfasst:
S123 - Erfassen einer Menge des in die Ferrule (10) mit mehreren Bohrungen eingespritzten Klebstoffs mit einem optischen Detektor (500); sowie
S124 - Steuern der Einspritzeinrichtung (100) auf Basis der von dem optischen Detektor (500) erfassten Menge des eingespritzten Klebstoffs so, dass sie den Klebstoff in die Ferrule (10) mit mehreren Bohrungen einspritzt, bis alle Bohrungen (12) der Ferrule (10) mit mehreren Bohrungen vollständig mit dem Klebstoff gefüllt sind.

## Revendications

1. Système d'injection automatique permettant d'injecter une colle dans les alésages (12) d'une virole à canaux multiples (10), comprenant :
un injecteur (100) conçu pour injecter la colle dans une ouverture d'injection (11) formée dans la virole à canaux multiples (10),
un premier poste d'injection de colle,
une première bride (400) configurée pour fixer la virole à canaux multiples (10) de sorte à maintenir la virole à canaux multiples (10) au niveau du premier poste d'injection de colle ; où, au niveau du premier poste d'injection de colle, des fibres optiques (22) ne sont pas insérées dans les alésages (12) de la virole à canaux multiples (10), et où l'injecteur (100) est conçu pour injecter la colle dans la virole à canaux multiples (10) dans laquelle ne sont pas insérées les fibres optiques (22), jusqu'à ce que les alésages (12) soient remplis entièrement de colle, où
le système d'injection automatique comprend en outre un second poste d'injection de colle,
une seconde bride (600) configurée pour fixer la virole à canaux multiples (10) de sorte à maintenir la virole à canaux multiples (10) au niveau du second poste d'injection de colle,
où, au niveau du second poste d'injection de colle, les fibres optiques (22) sont insérées dans les alésages (12) de la virole à canaux multiples (10) qui sont remplis entièrement de colle ; et l'injecteur (100) est conçu pour injecter la colle dans la virole à canaux multiples (10) de nouveau de sorte à compenser la perte de colle pendant l'insertion des fibres optiques (22),
où le système d'injection automatique comprend en outre un mécanisme mobile configuré pour déplacer l'injecteur (100) vers le premier et le second poste d'injection de colle.

2. Système d'injection automatique selon la revendication 1, dans lequel, au niveau du premier ou du second poste injection de colle, une aiguille (110) de l'injecteur (100) est alignée avec l'ouverture d'injection (11) de la virole à canaux multiples (10) maintenue par la première la seconde bride (400, 600).

3. Système d'injection automatique selon la revendication 1, dans lequel :
le mécanisme mobile comprend un support mobile (200) qui peut se déplacer dans une première direction, une deuxième direction et une troisième direction, qui sont perpendiculaires l'une à l'autre, et
l'injecteur (100) est monté sur le support mobile (200) de sorte à se déplacer avec le support mobile (200).

4. Système d'injection automatique selon la revendication 1, dans lequel :
le mécanisme mobile comprend un manipulateur ou un robot qui est conçu pour maintenir et déplacer l'injecteur (100).

5. Système d'injection automatique selon la revendication 1, comprenant en outre :
un dispositif d'aspiration (300) disposé au niveau du premier poste d'injection de colle, lequel est conçu pour être fixé à l'extrémité avant (10a) de la virole à canaux multiples (10) par la force d'aspiration de sorte à ce que la colle injectée dans l'ouverture d'injection (11) est aspirée dans les canaux (12).

6. Système d'injection automatique selon la revendication 5, comprenant en outre :
un détecteur visuel (100) disposé au niveau du premier poste d'injection de colle, configuré pour détecter la quantité de colle injectée dans la virole à canaux multiples (10), et
un contrôleur configuré pour piloter l'injecteur (100) pour qu'il injecte la colle dans la virole à canaux multiples (10) sur la base de la quantité de colle injectée détectée par le détecteur visuel (500) jusqu'à ce que tous les canaux (12) de la virole à canaux multiples (10) soient remplis entièrement de colle.

7. Procédé de fabrication d'un ensemble formant virole comprenant une virole à canaux multiples (10) possédant une pluralité de canaux (12) et des fibres optiques (22) insérées dans les canaux (12), comprenant les étapes suivantes :
S110 : le maintien de la virole à canaux multiples (10), dans laquelle ne sont pas insérées les fibres optiques (22), sur une première bride (400) disposée au niveau d'un premier poste d'injection de colle,
S120 : l'injection d'une colle dans la virole à canaux multiples (10), dans laquelle ne sont pas insérées les fibres optiques (22), avec un injecteur (100) jusqu'à ce que les canaux (12) soient remplis entièrement de colle,
S130 : l'enlèvement de la virole à canaux multiples (10) de la première bride (400) et le maintien de la virole à canaux multiples (10) sur une seconde bride (600) disposée au niveau d'un second poste d'injection de colle,
S140 : l'insertion des fibres optiques (22) dans les canaux (12) de la virole à canaux multiples (10) maintenue par la seconde bride (600), et
S150 : l'injection à nouveau de colle dans la virole à canaux multiples (10), dans laquelle sont insérées les fibres optiques (22), avec l'injecteur (100) de sorte à compenser la perte de colle pendant l'insertion des fibres optiques (22), où
le procédé comprend en outre une étape de déplacement de l'injecteur (100) grâce à un mécanisme mobile, de sorte à déplacer l'injecteur (100) vers le premier et le second poste d'injection de colle.

8. Procédé selon la revendication 7, dans lequel, au niveau du premier ou du second poste d'injection de colle, une aiguille (110) de l'injecteur (100) est alignée avec l'ouverture d'injection (11) de la virole à canaux multiples (10) maintenue par la première la seconde bride (400, 600).

9. Procédé selon la revendication 8, dans lequel :
le mécanisme mobile comprend un support mobile (200) qui peut se déplacer dans une première direction, une deuxième direction et une troisième direction, qui sont perpendiculaires l'une à l'autre, et
l'injecteur (100) est monté sur le support mobile (200) de sorte à se déplacer avec le support mobile (200).

10. Procédé selon la revendication 7, dans lequel le mécanisme mobile comprend un manipulateur ou un robot qui est conçu pour maintenir et déplacer l'injecteur (100).

11. Procédé selon la revendication 7, dans lequel l'étape S120 comprend les étapes suivantes :
5121 : l'injection de la colle dans une ouverture d'injection (11) de la virole à canaux multiples (10), et
5122 : l'aspiration de la colle au niveau de l'extrémité avant (10a) de la virole à canaux multiples (10) grâce à un dispositif d'aspiration (300) de sorte à aspirer dans les canaux (12) la colle injectée dans l'ouverture d'injection (11) .

12. Procédé selon la revendication 11, dans lequel l'étape S120 comprend en outre les étapes suivantes :
5123 : la détection de la quantité de colle injectée dans la virole à canaux multiples (10) grâce à un détecteur visuel (500), et
S124 : le pilotage de l'injecteur (100) pour qu'il injecte la colle dans la virole à canaux multiples (10) sur la base de la quantité de colle injectée détectée par le détecteur visuel (500) jusqu'à ce que tous les canaux (12) de la virole à canaux multiples (10) soient remplis entièrement de colle.
